# EUROPEAN PATENT APPLICATION

(11) **EP 3 809 359 A1**
(43) Date of publication of application: **21.04.2021**
(21) Application number: 19202961.9
(22) Date of filing: 14.10.2019
(51) Int. Cl.: G06Q 50/30, G06Q 10/06, G02B 27/01, B60K 37/00, A63F 13/00

(54) **VEHICLE DRIVING CHALLENGE SYSTEM AND CORRESPONDING METHOD**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); ZHENG, Yijun, 426 68 VÄSTRA FRÖLUNDA (SE)
(74) Representative: Zacco Sweden AB

(57) **Abstract**

The present disclosure relates to a vehicle driving challenge system comprising: a first mobile module (10) including a first mobile communication device (11) and a first mobile user interface (12) and being configured for being included in a first vehicle (1) and being operated by a first driver, a second mobile module (20) including a second mobile communication device (21) and a second mobile user interface (22) and being configured for being included in a second vehicle (2) and being operated by a second driver, a computer server system (30) configured for enabling wireless communication with each of the first and second mobile communication devices (11, 21), wherein the first mobile module (10) is configured for registering a request from the first driver via the first mobile user interface (12) for initiating a driving challenge, and subsequently submitting a corresponding request to the computer server system (30) via the first mobile communication device (12), which request includes planned driving route information and location of the first mobile module (10), wherein the computer server system (30) is configured for, upon receipt of said request, checking whether the second driver has requested or indicated willingness to participate in a driving challenge, and checking whether the second mobile module (20): has a planned driving route (42) at least partly in common with the planned driving route (41) of the first mobile module (10), or is located within a range of less than 20 km from the location of the first mobile module (10), or is estimated able to take a driving route that is running at least partly in common with the planned driving route (41) of the first mobile module (10), and if affirmative, determining a common driving challenge route (50) associated with the first and second mobile modules (10, 20) and based on the planned driving route (41) of the first mobile module (10), and initiating a real-time concurrent vehicle driving challenge between the first and second drivers along the common driving challenge route (50). The present disclosure also relates to a corresponding method.

## Description

### TECHNICAL FIELD

The disclosure relates to a vehicle driving challenge system and a method for performing a vehicle driving challenge.

The method and system according to the disclosure can be arranged in any type of road vehicle suitable for public road travel.

Specifically, although the method and system according to the disclosure is described primarily in relation to a car, the method and system according to the disclosure is not restricted to this particular type of vehicle, but may alternatively be implemented in other type of vehicles such as trucks, buses, motorcycles, etc.

### BACKGROUND ART

Increasing and maintaining a high driver alertness while driving is generally advantageous in terms of driving safety and accident avoidance. One solution for increasing driver alertness may be driver involvement in a game or a challenge associated with the driving route, and there are for example systems available for enabling drivers of different vehicles to participate in various types of games or challenges, while competing for example against other drivers.

For example, document US 2017/097243 A1 shows a game interaction system having a games module enabling a driver to compete with another driver playing the same game, which could assist with, for example, maintaining driver alertness.

However, despite the activities in the field, there is still a demand for a further improved vehicle driving challenge.

### SUMMARY OF THE DISCLOSURE

This section provides a general summary of the disclosure, and is not a comprehensive disclosure of its full scope or all of its features.

A general object of the present disclosure is to provide an improved vehicle driving challenge system and method for enabling improved driver alertness and attention to the traffic situation. Specifically, the prior art game interaction systems configured for enabling the driver to participate in challenges together with drivers of other vehicles do not provide a solution for enabling a quick, efficient and user-friendly initialisation process for vehicle driving challenge.

This and other objects, which will become apparent in the following, are accomplished by a vehicle driving challenge system and method for performing a vehicle driving challenge as defined in the accompanying independent claims.

According to a first aspect of the present disclosure, there is provided a vehicle driving challenge system comprising a first mobile module including a first mobile communication device and a first mobile user interface and being configured for being included in a first vehicle and being operated by a first driver, a second mobile module including a second mobile communication device and a second mobile user interface and being configured for being included in a second vehicle and being operated by a second driver, and a computer server system configured for enabling wireless communication with each of the first and second mobile communication devices. The first mobile module is configured for registering a request from the first driver via the first mobile user interface for initiating a driving challenge, and subsequently submitting a corresponding request to the computer server system via the first mobile communication device, which request includes planned driving route information and location of the first mobile module. Furthermore, the computer server system is configured for, upon receipt of said request, checking whether the second driver has requested or indicated willingness to participate in a driving challenge, and checking whether the second mobile module: has a planned driving route at least partly in common with the planned driving route of the first mobile module, or is located within a range of less than 20 km from the location of the first mobile module, or is estimated able to take a driving route that is running at least partly in common with the planned driving route of the first mobile module. If affirmative, the computer server system is configured for determining a common driving challenge route associated with the first and second mobile modules and based on the planned driving route of the first mobile module, and initiating a real-time concurrent vehicle driving challenge between the first and second drivers along the common driving challenge route.

According to a second aspect of the present disclosure, there is provided a method for performing a vehicle driving challenge comprising: receiving, in a computer server system, a request for initiating a driving challenge submitted by a first driver of a first vehicle by means of a first mobile module including a first mobile communication device and a first mobile user interface, wherein the request includes planned driving route information and location of the first vehicle; identifying a second vehicle having a second driver, wherein the second driver has requested or indicated willingness to participate in a driving challenge by means of a second mobile module including a second mobile communication device and a second mobile user interface, and wherein the second vehicle: has a planned driving route at least partly in common with the planned driving route of the first vehicle, or is located within a range of less than 20 km from the location of the first vehicle, or is estimated able to take a driving route that is running at least partly in common with the planned driving route of the first vehicle; determining a common driving challenge route associated with the first and second vehicles and based on the planned driving route of the first vehicle; and initiating a real-time concurrent vehicle driving challenge between the first and second drivers along the common driving challenge route.

In this way, improvement in terms of a quicker and more efficient and user-friendly initialisation process of the vehicle driving challenge is accomplished. Specifically, the system and method defined above applies a matching process for identifying a second driver that will enable quick initialisation of the driving challenge upon request from the first driver, so that the first and second drivers may benefit from and enjoy the driving challenge as much as possible during their respective driving route. A quick initialisation process is particularly advantageous when the planned driving route is relatively short. The matching process involves identifying a second vehicle based either on common driving route or vicinity between the first and second vehicles, such that only those second vehicles that may provide a quick and good match with the first vehicles are relevant for initiating the real-time concurrent vehicle driving challenge between the first and second drivers, thereby ensuring an efficient and user-friendly operation.

Further advantages are achieved by implementing one or several of the features of the dependent claims.

In one example embodiment, the vehicle driving challenge system further comprises a first vehicle including said first mobile module and a second vehicle including said second mobile module, wherein the first vehicle further comprises a wearable or non-wearable augmented-reality head-up display or augmented-reality front window, a first sensor device for detecting eye or head position of the first driver, and a second sensor device for detecting relative position of the first and second vehicles, wherein the head-up display or augmented-reality front window is configured for, based on sensor data from first and second sensor devices, displaying a marking on the head-up display or augmented-reality front window in the line-of-sight between the first driver and the second vehicle, such that the second vehicle may be clearly visually identified by the first driver when looking out through the front window. A problem with the driving challenge is the participating drivers do not easily know exactly which among the neighbouring vehicles are actually participating in the challenge, and knowledge of this may generally increase the driver's experience of a challenge against another driver. However, by clearly visually identifying the second vehicle by a marking when looking out through the front window of the first vehicle, the first driver is intuitively made aware of the position of the second driver when they are driving close to each other.

In one example embodiment, the second vehicle has a planned driving route at least partly in common with the planned driving route of the first vehicle, and wherein an estimated arrival time at a start of the common planned driving route differs less than 10 minutes between the first and second vehicles, or is located within a range of less than 20 km from the location of the first vehicle, or is estimated able to take a driving route that is running at least partly in common with the planned driving route of the first vehicle, and wherein an estimated arrival time at a start of the common driving route differs less than 10 minutes between the first and second vehicles. Thereby, a more user-friendly driving challenge system is provided, because the participants of the driving challenge do not have to wait for each other too long before initiating the driving challenge.

In one example embodiment, the method further comprises, after determining the common driving challenge route, submitting an invitation to participate in a driving challenge to the second driver, including the common driving challenge route, and first upon receiving an acceptance to participate in the driving challenge from the second driver, initiating said vehicle driving challenge between the first and second drivers along said common driving challenge route. Thereby, the second driver has the possibility to reject the proposed common driving challenge route at an early phase for any reason, such as a proposed common driving challenge route that is deemed not consistent with the desired driving route, or the like.

In one example embodiment, the method further comprises, when the second driver having requested or indicated willingness to participate in a driving challenge is identified, but the second vehicle has not a planned driving route sufficiently in common with the planned driving route of the first vehicle, or the second driver does not accept participating in a driving challenge based on the planned driving route of the first vehicle, checking whether the first vehicle is estimated able to take a driving route that is running at least partly in common with the planned driving route of the second vehicle, and if affirmative, determining a new common driving challenge route associated with the first and second vehicles and based on the planned driving route of the second vehicle, and subsequently submitting an invitation to participate in a driving challenge to the first driver, including the new common driving challenge route, and upon receiving an acceptance to participate in the driving challenge from the first driver, initiating said vehicle driving challenge between the first and second drivers along said new common driving challenge route. This approach thus checks the flexibility for changing driving route of the first driver, in case the second driver rejects the proposal. This approach thus typically results in increased likelihood for finding a common driving challenge route that may be acceptable for both drivers.

In one example embodiment, the method comprises displaying also a score status of each vehicle participating in the vehicle driving challenge on the display within each vehicle participating in the vehicle driving challenge, wherein the score status is based on one or more of the following challenge rules: how time-accurate the competing vehicles passes a set of time gates along the common driving challenge route, accumulated electric energy and/or fuel consumption during the driving along the common driving challenge route, how well the vehicle maintains a constant speed, how little the vehicle friction brakes and/or engine brake are used, the lowest maximal vehicle longitudinal and lateral rate of change of acceleration and deceleration levels, highest average vehicle speed without changing lane, shortest time for traveling from start to end of the common driving challenge route, or how seldom a vehicle driving assistance system or autonomous driving assistance system is activated for maintaining safe driving and adherence to the traffic laws. By enabling the drivers to monitor and follow the score status of all participating vehicles, the drivers may have a greater experience and be more focused and attentive drivers.

In one example embodiment, the vehicle braking performance and/or vehicle acceleration performance of at least one of the vehicles participating in the vehicle driving challenge are temporarily reduced during the vehicle driving challenge for increasing the complexity for at least one of the first and second drivers. This measure also results in a more focused and attentive drivers because the complexity in increased.

In one example embodiment, the method further comprises monitoring eye or head position of the first driver by means of a first sensor device for detecting eye or head position of the first driver, monitoring relative position of the first and second vehicles by means of a second sensor device for detecting relative position of the first and second vehicles, and displaying a marking on a head-up display or augmented-reality front window in the line-of-sight between the first driver and the second vehicle, such that the second vehicle may be clearly visually identified by the first driver when looking out through the front window. As described above, by clearly visually identifying the second vehicle by a marking when looking out through the front window of the first vehicle, the first driver is intuitively made aware of the position of the second driver when they are driving close to each other, thereby making the drivers more focused and attentive.

In one example embodiment, the method comprise receiving, in the computer server system, a request submitted by the second driver for personalizing a visual exterior of the second vehicle by a personalized feature, as seen through the head-up display or augmented-reality front window by the first driver, and displaying a virtual image of the personalized feature on the head-up display or augmented-reality front window in the line-of-sight between the first driver and the second vehicle, such that the first driver sees a personalized visual exterior of the second vehicle when looking out through the front window. A personalized imaginary visual exterior of the vehicle when looking out through the front window may increase the drivers challenge experience and result in more focused and alert drivers.

In one example embodiment, the method comprises operating at least during ongoing vehicle driving challenge a vehicle driving assistance system or autonomous driving assistance system in a supervision mode, in which the system performs active supervision over the vehicle's driving behaviour for improving safe driving and adherence to the traffic laws. Thereby, the operation of the driving challenge is effectively maintained within a safe and controlled framework.

In one example embodiment, one or both of the first and second vehicles have fully autonomous driving capability, and wherein the method comprises, upon initiating the vehicle driving challenge between the first and second drivers along the common driving challenge route, activating said fully autonomous driving, such that the first and/or the second vehicles passes a start of the common driving challenge route at a planned starting time of the vehicle driving challenge. Thereby, the user-friendliness of the system is increased because the drivers themselves do not have to bother about arriving at the start at the planned starting time.

In one example embodiment, the method further comprises identifying also a third vehicle having a third driver, wherein the third driver has requested or indicated willingness to participate in a driving challenge by means of a third mobile module including a third mobile communication device and a third mobile user interface, and wherein the third vehicle has: has a planned driving route at least partly in common with the planned driving route of the first vehicle, or is located within a range of less than 20 km from the location of the first vehicle, or is estimated able to take a driving route that is running at least partly in common with the planned driving route of the first vehicle. The method further comprises, when a third vehicle has been identified, determining also a further common driving challenge route associated with the first and third vehicles and based on the planned driving route of the first vehicle, presenting the common driving challenge route associated with the first and second vehicles and the further common driving challenge route associated with the first and third vehicles to the first driver, and receiving a selection to initiate a driving challenge along one of said common driving challenge routes from the first driver, and initiating said real-time concurrent vehicle driving challenge between the first and second drivers along said common driving challenge route or between the first and third drivers along said further common driving challenge route in accordance with the selection of the first driver. This embodiment thus enables the first driver to select the most desirable driving challenge in a situation where several different driving challenges are available.

In one example embodiment, the method comprises displaying the common driving challenge route(s) on a display within each vehicle participating in the vehicle driving challenge. This generally increases the driver's awareness and makes them more alert during the challenge.

In one example embodiment, the method comprises displaying also a real-time position of each vehicle participating in the vehicle driving challenge on the display within each vehicle participating in the vehicle driving challenge. This generally increases the driver's awareness and makes them more alert during the challenge.

Further features of, and advantages with, the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF THE DRAWINGS

The various example embodiments of the disclosure, including its particular features and example advantages, will be readily understood from the following illustrative and non-limiting detailed description and the accompanying drawings, in which:
Fig. 1 is a schematic view of an example embodiment of a system;
Figs. 2a - 2b show an example of a start-up and ongoing driving challenge;
Figs. 3a - 3b show a further example of a start-up and ongoing driving challenge;
Figs. 4a - 4c show still a further example of a start-up and ongoing driving challenge;
Fig. 4d shows start-up of yet a further driving challenge;
Figs. 5a - 5b show still a further example of a start-up and ongoing driving challenge;
Figs. 6a - 6b show a vehicle having an augmented-reality front window;
Fig. 7 is a schematic view of an imaginary personalized visual exterior of a vehicle;
Figs. 8 - 10 show various methods performing the driving challenge.

### DETAILED DESCRIPTION OF EXAMPLE EMBODIMENTS OF THE DISCLOSURE

The present disclosure will now be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present disclosure.

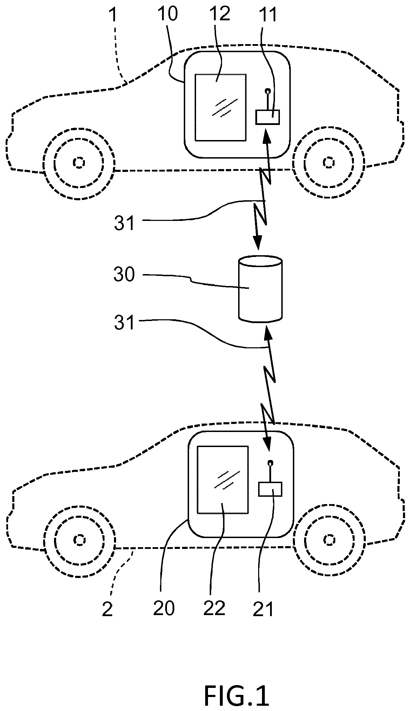

A first example embodiment of the system and method according to the disclosure will be described more in detail with reference to figure 1, which schematically illustrates the main parts of the disclosure. Specifically, the vehicle driving challenge system comprises a first mobile module 10 including a first mobile communication device 11 and a first mobile user interface 12, wherein the first mobile module 10 is configured for being included in a first vehicle 1 and being operated by a first driver. Furthermore, the vehicle driving challenge system comprises a second mobile module 20 including a second mobile communication device 21 and a second mobile user interface 22, wherein the second mobile module 20 is configured for being included in a second vehicle 2 and being operated by a second driver. The vehicle driving challenge system additionally comprises a computer server system 30 configured for enabling wireless communication 31 with each of the first and second mobile communication devices 11, 21. The first mobile module 10 is configured for registering a request from the first driver via the first mobile user interface 12 for initiating a driving challenge, and subsequently submitting a corresponding request to the computer server system 30 via the first mobile communication device 11, which request includes planned driving route information and location of the first mobile module 10. Furthermore, the computer server system 30 is configured for, upon receipt of said request, checking whether the second driver has requested or indicated willingness to participate in a driving challenge, and checking whether the second mobile module 20 has a planned driving route at least partly in common with the planned driving route of the first mobile module 10, or is located within a range of less than 20 km from the location of the first mobile module 10, or is estimated able to take a driving route that is running at least partly in common with the planned driving route of the first mobile module 10. If affirmative, the computer server system 30 is configured for determining a common driving challenge route associated with the first and second mobile modules 10, 20 and based on the planned driving route of the first mobile module 10, and initiating a real-time concurrent vehicle driving challenge between the first and second drivers along the common driving challenge route.

The first mobile module 10 may for example be implemented in form of in-vehicle stationary mounted module, i.e. in the first vehicle 1, wherein the first mobile communication device 11 may be a an in-vehicle stationary mounted wireless cellular communication device, such as a GSM device, and wherein the first mobile user interface 12 may be implemented in form of an in-vehicle stationary mounted display.

Alternatively, the first mobile module 10 may for example be implemented in form of smartphone, tablet, computer or similar mobile computing device that may be brought along and made accessible in the first vehicle 1, wherein the first mobile communication device 11 may be the wireless cellular communication device normally provided in smartphones, tablet computers, or the like, and wherein the first mobile user interface 12 may be implemented in form of the display normally available in a smartphone, tablet computer or the like.

The same applies to the second mobile module 20 having the second mobile communication device 21 and second mobile user interface 22.

The computer server system 30 may for example be implemented in form of a stationary computer server having a database computer storage, and a communication device configured for communication with the first and second mobile communication devices 11, 21.

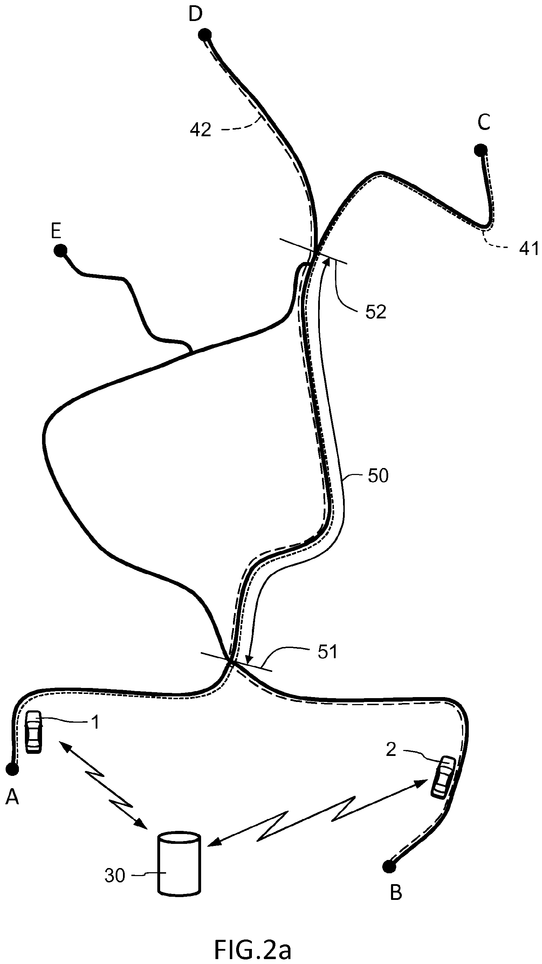

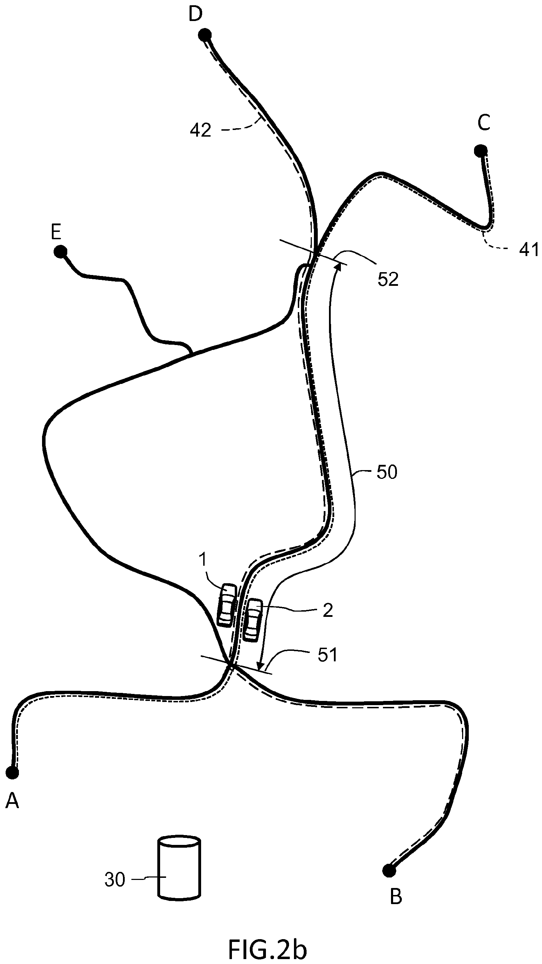

A first example of the operation of the system described above will be described with reference to figures 2a and 2b, which schematically illustrates an example layout of a geographical area having a plurality of destinations A-E and a plurality of roads connecting said destinations A-E, and two driving states of the first and second vehicles 1, 2 driving along individual routes.

Specifically, figure 2a shows a first time point representing a relatively early state of a driving route of the first and second vehicles 1, 2. In this schematic and purely example illustration, the first vehicle starts from point A and drives along a first planned driving route 41 to destination C, and the second vehicle starts from point B and drives along a second planned driving route 42 to destination D.

At a certain time point, for example at time t1 shortly after the first vehicle departs from point A, the first mobile module 10 registers a request from the first driver via the first mobile user interface 12 for initiating a driving challenge. The first mobile module thereafter submits a corresponding request to the computer server system 30 via the first mobile communication device 11, which request includes the planned driving route information of the first vehicle, i.e. route A to C, and current location of the first mobile module 10.

Upon receipt of said request, the computer server system 30 tries to identify a second vehicle having a second driver, which the second driver has requested or indicated willingness to participate in a driving challenge by means of a second mobile module including a second mobile communication device and a second mobile user interface. This identification may for example be performed by simply searching a list a vehicles having previously submitted a request or otherwise indicated willingness to participate in a driving challenge.

The request for initiating a driving challenge from the first vehicle may be received by the computer server system 30 before or after receiving the request or indication of willingness to participate in a driving challenge by the second vehicle.

Hence, if we assume that a notification or request from the second driver inputted via the second mobile user interface 22 and submitted to the computer server system via the second mobile communication device 21 was received by the computer server system at time t2, which notification or request was a request or indication of willingness to participate in a driving challenge or a request for initiating a driving challenge, the computer server system 30 would identify the second vehicle.

Thereafter, the system is configured for performing a matching process of all requests for initiating and participating in driving challenges received from various vehicles at various time points, for providing the drivers with a quick, efficient and user-friendly initialisation of a driving challenge.

In other words, the system is configured for only continue with initialisation of a driving challenge if any of certain alternative matching criteria are fulfilled.

For example, a first alternative matching criteria is that the second vehicle 2 has a planned driving route 42 at least partly in common with the planned driving route 41 of the first vehicle 1. This means that the second vehicle 2 must provide the planned driving route information of the second vehicle 2, i.e. route B to D, and the current location of the second mobile module 20 or second vehicle 2, to the computer server system 30. This may for example be made automatically in connection with submission of the notification or request from the second driver to the computer server system 30, or upon request from the computer server system 30.

When the planned driving routes 41, 42 of both the first and second vehicles are obtained, the system, e.g. the computer server system 30, is configured to determine a common driving challenge route 50 associated with the first and second vehicles 1, 2 and based on the planned driving route 41 of the first vehicle 1. In figure 2a, the common driving challenge route 50 has a start 51 and an end 52.

After having determined the common driving challenge route 50, the system, e.g. computer server system 30, is configure to initiating a real-time concurrent vehicle driving challenge between the first and second drivers along the common driving challenge route 50, with start at the start 51.

Figure 2b illustrates a second time point of the first example of the operation of the system, which second time point represents a relatively early state of the ongoing driving challenge along the common driving challenge route 50. The start of the driving challenge was preferably performed with both the first and second vehicles 1,2 being available and ready to start the challenge at the start 51.

In certain scenarios, no planned driving route information of the second vehicle 2 is provided, corresponding for example to a second driver that is maybe simply driving towards a certain destination without navigation system support, and/or a second driver that is more flexible in terms of adopting a route decided by someone else, such as the first driver. The second driver may nevertheless want to participate in a driving challenge against another driver.

The start-up steps of such an alternative vehicle driving challenge system applying a second alternative matching criteria is the same as that described with reference to fig. 2a and 2b, i.e. the first mobile module 10 registers a request from the first driver for initiating a driving challenge, and the computer server system 30 tries to identify a second vehicle having a second driver that has requested or indicated willingness to participate in a driving challenge.

However, the matching process of all requests for initiating and participating in driving challenges received from various vehicles at various time points is different because the system cannot establish whether the second mobile module 20 has a planned driving route at least partly in common with the planned driving route of the first mobile module 10 Consequently, the system is therefore configured to apply a second alternative matching criteria that involves determining whether the second vehicle is located within a range of less than 20 km from the location of the first vehicle.

If affirmative, the computer server system 30 is configured for determining a common driving challenge route associated with the first and second mobile modules 10, 20 and based on the planned driving route of the first mobile module 10, and initiating a real-time concurrent vehicle driving challenge between the first and second drivers along the common driving challenge route.

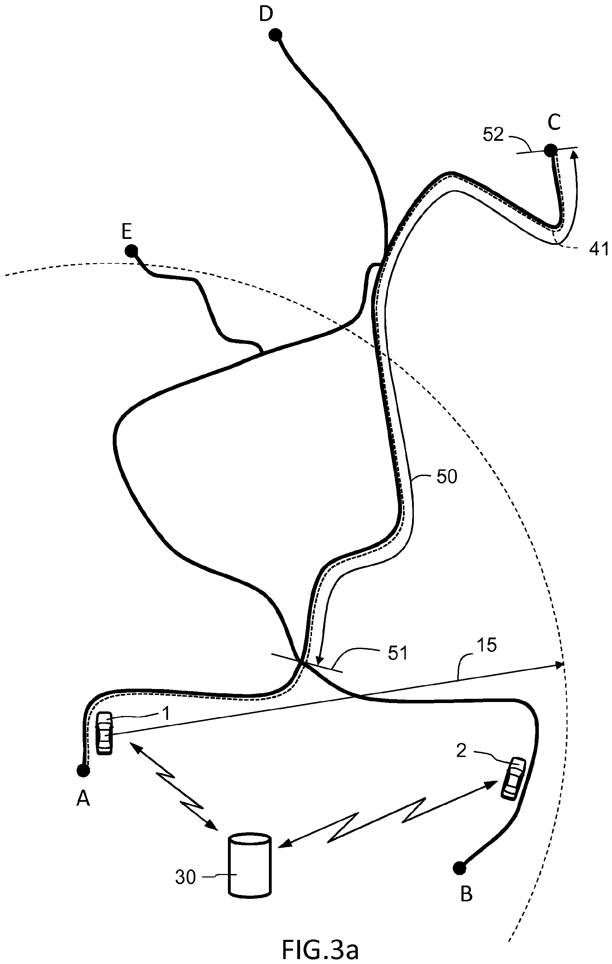

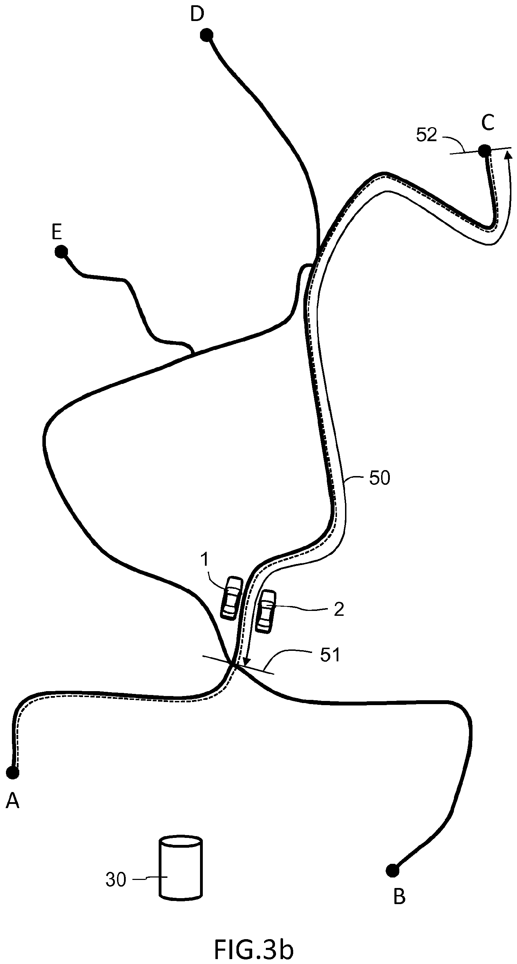

Such an alternative driving challenge system is described below with reference to figures 3a and 3b, which show first and second time points of the driving challenge sequence. Specifically, figure 3a shows a first time point representing a relatively early state of a driving route of the first and second vehicles 1, 2, and figure 3b illustrates a second time point representing an early state of the ongoing driving challenge along the common driving challenge route 50.

In this schematic and purely example illustration, the first vehicle starts from point A and drives along a first planned driving route 41 to destination C, and the second vehicle starts from point B and drives along an unknown driving route.

As described before, a request from the first driver for initiating a driving challenge is received by the computer server system 30, which request includes the planned driving route information of the first vehicle, i.e. route A to C, and current location of the first mobile module 10. Upon receipt of said request, the computer server system 30 identifies the second vehicle because the second driver has requested or indicated willingness to participate in a driving challenge.

The matching process involves determining whether the second vehicle is located within a range 15 of less than 20 km from the location of the first vehicle, as illustrated in figure 3a. This means that the second vehicle 2 must provide the location of the second mobile module 20 or second vehicle 2, to the computer server system 30. This may for example be made automatically in connection with submission of the notification or request from the second driver to the computer server system 30, or upon request from the computer server system 30.

In the present example of figure 3a, since the second vehicle is located within a range 15 of less than 20 km from the location of the first vehicle 1, the system, e.g. the computer server system 30, is configured to determine a common driving challenge route 50 associated with the first and second vehicles 1, 2 and based on the planned driving route 41 of the first vehicle 1. In figure 3a, the common driving challenge route 50 has a start 51 and an end 52. Thereafter, the system, e.g. computer server system 30, is configured to initiating a real-time concurrent vehicle driving challenge between the first and second drivers along the common driving challenge route 50, with start at the start 51.

Figure 3b illustrates a second state representing an early state of the ongoing driving challenge along the common driving challenge route 50, and the vehicle driving challenge system according to the second alternative matching criteria may be deemed providing the drivers with a quick, efficient and user-friendly initialisation of a driving challenge.

The second alternative matching criteria that involves determining whether the second vehicle is located within a range of less than 20 km from the location of the first vehicle may in certain situations result in less efficient and user-friendly matching of vehicles for a driving challenge, for example when there some type of barrier preventing the second vehicle from easily arriving at the start 51 of the common driving challenge route 50 despite being within said distance of said first vehicle. The barrier may for example be caused by traffic rules, traffic jams, lack of connecting roads, or the like.

In such cases, a third alternative matching criteria involving checking whether the second vehicle 2 is estimated able to take a driving route that is running at least partly in common with the planned driving route of the first vehicle 1, may be applied. In other words, the system is configured to make an estimation, taking into account the planned driving route of the first vehicle 1 and current location of the second vehicle 2, and the possibility for the second vehicle 2 to reach the planned driving route of the first vehicle 1.

This estimation may then be performed taking aspects such as traffic rules, traffic jams, connecting roads, and the like, into account.

For providing further improvement in terms of quick, efficient and user-friendly initialisation process for the vehicle driving challenge, the timing of an estimated arrival time of the first and second vehicles 1, 2 may additionally be taken into account in the matching process described above. For example, the system be configured such that vehicle driving challenge between the first and second drivers along the common driving challenge route is only initiated when the estimated arrival times of the first and second vehicles 1, 2 do not differ too much.

For example, the computer server system may after having received the first and second planned driving routes 41, 42 be configured to check whether the second mobile module 20 has a planned driving route at least partly in common with the planned driving route of the first mobile module 10 and whether an estimated arrival time of said first and second vehicles 1, 2 at a start of said common planned driving route differs less than 10 minutes between the first and second vehicles 1, 2. If affirmative, the system may be configured to proceed with the steps of determining a common driving challenge route associated with the first and second mobile modules 10, 20, and initiating the real-time concurrent vehicle driving challenge between the first and second drivers.

Alternatively, the computer server system may after having received the first and second planned driving routes 41, 42 be configured to check whether the second vehicle is estimated able to take a driving route that is running at least partly in common with the planned driving route of the first vehicle, and whether the estimated arrival time of said first and second vehicles 1, 2 at a start of the common driving route differs less than 10 minutes between the first and second vehicles. If affirmative, the system may be configured to proceed with the steps of determining a common driving challenge route associated with the first and second mobile modules 10, 20, and initiating the real-time concurrent vehicle driving challenge between the first and second drivers.

According to an example embodiment, one or both of the first and second vehicles 1,2 have fully autonomous driving capability. Thereby, the vehicle driving challenge system may be configured to activating said fully autonomous driving upon initiating the vehicle driving challenge between the first and second drivers along the common driving challenge route 50, such that the first and/or the second vehicles 1, 2 passes the start 51 of the common driving challenge route 50 at a planned starting time of the vehicle driving challenge. Thereby, any problematic situation caused by drivers attempt slowing down or speeding up to reach a the start at a certain start time, for ensuring the real-time concurrent vehicle driving challenge between the first and second drivers, may be largely avoided.

Unless not already activated, the activating of a fully autonomous driving mode may be performed automatically upon initiating the vehicle driving challenge. Alternatively, the activating of a fully autonomous driving mode may be driver initiated, such as for example via a vehicle user interface.

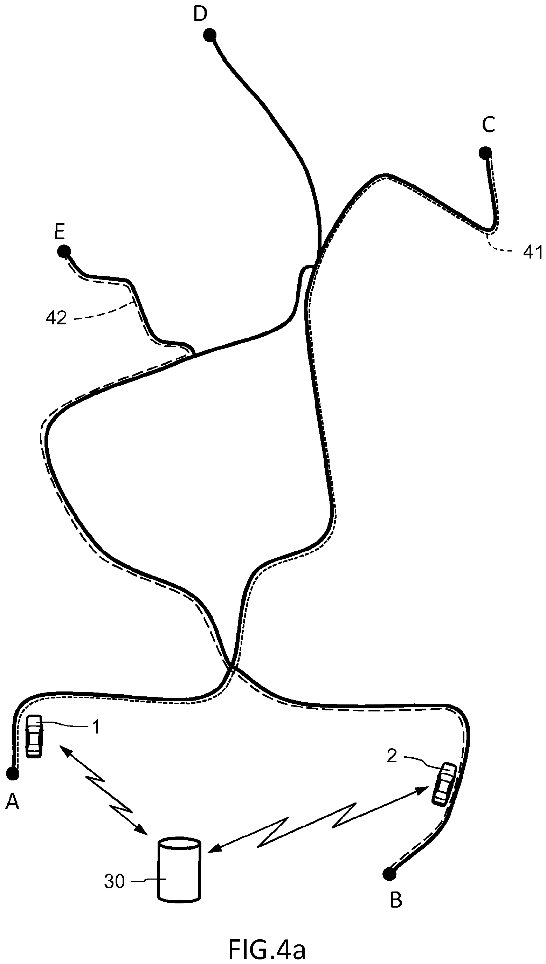

According to some example embodiments of the vehicle driving challenge system, as schematically illustrated in figure 4a, the first and second planned driving routes 41, 42 do not overlap sufficiently for providing a common driving route. In such circumstance, the system may be configured to check whether any of the first and second vehicles 1, 2 is estimated able to replace the planned driving route with a new driving route that includes a common driving route.

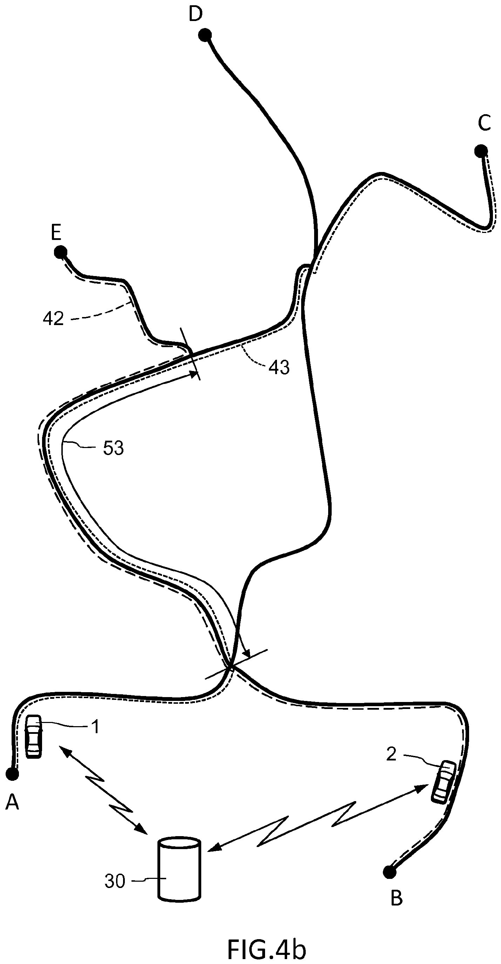

For example, as schematically illustrated in figure 4a, when the system determines that the second vehicle 2 has not a planned driving route 42 sufficiently in common with the planned driving route of the first vehicle, i.e. for example when the common length is less than 5 km, specifically less than 2.5 km, the system may be configured to check whether the first vehicle 1 is estimated able to take a new driving route 43 running from point A to destination C, as before, but running at least partly in common with the planned driving route of the second vehicle, as illustrated in figure 4b. The process of estimating whether the first vehicle 1 is able to take a new driving route 43 may involve evaluating any travel delay such a re-routing may cause the first driver.

If the first vehicle 1 is estimated able to take a new driving route, the system is configured to determine a new common driving challenge route 53 associated with the first and second vehicles 1, 2 and based on the planned driving route 42 of the second vehicle 2, and subsequently submitting an invitation to participate in a driving challenge to the first driver, including the new common driving challenge route 53, possibly also including a planned starting time.

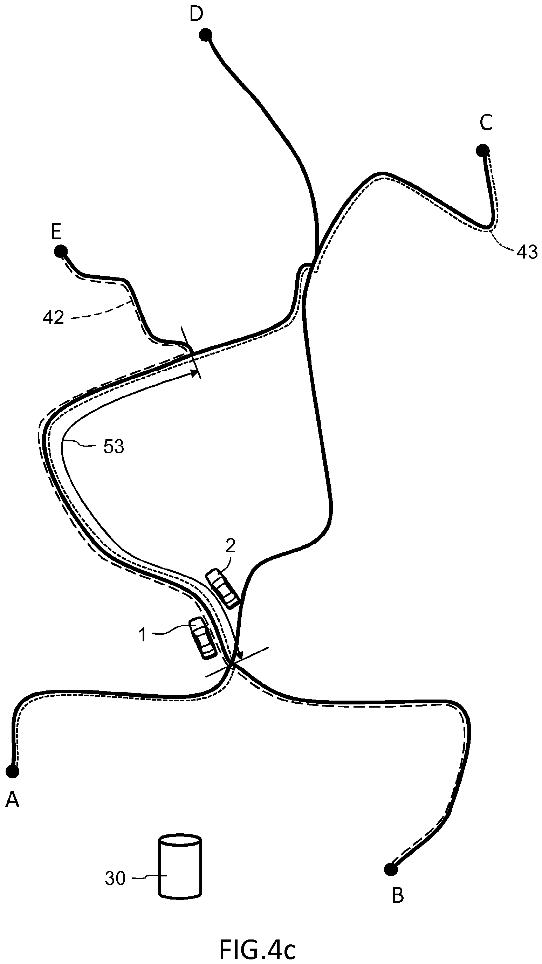

The system is further configured to, upon receiving an acceptance to participate in the driving challenge from the first driver, initiating said vehicle driving challenge between the first and second drivers along said new common driving challenge route 53. Figure 4c then illustrates an early state of the ongoing driving challenge along the new common driving challenge route 53.

This approach of checking whether the first vehicle 1 is estimated able to replace the planned driving route 41 with a new driving route that includes a common driving route with the second vehicle 2 while still running from point A to destination C, as before, may also be applied when the second driver for any reasons does not accept participating in a driving challenge based on the planned driving route 41 of the first vehicle 1.

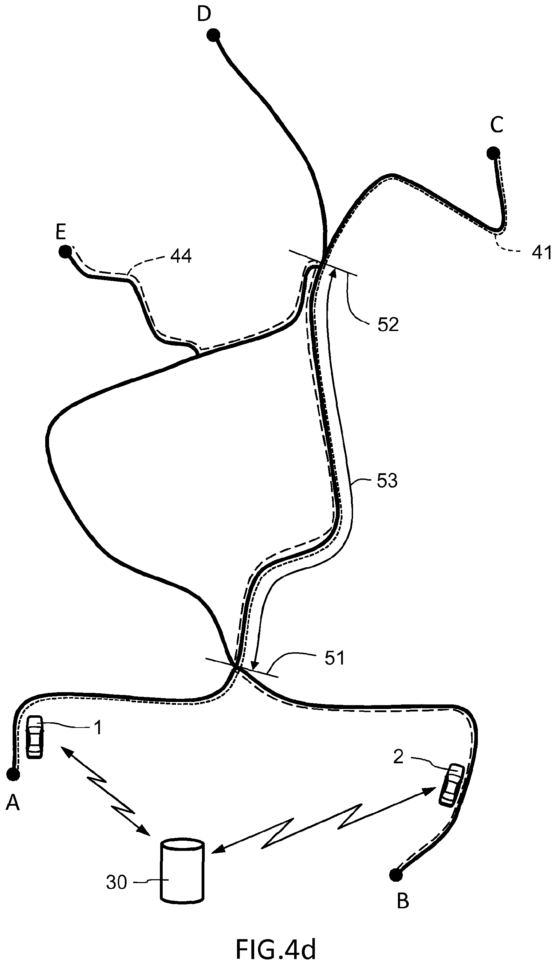

Similarly, in circumstance described above with reference to figure 4a-4c, the system may additionally, or alternatively, be configured to check whether the second vehicle 2 is estimated able to take a new driving route 44 running from point B to destination E, as before, but running at least partly in common with the planned driving route of the second vehicle 1, as illustrated in figure 4d. By analogy, the system would then be configured to determine a new common driving challenge route 53 associated with the first and second vehicles 1, 2 and based on the planned driving route 41 of the first vehicle 1, and subsequently submitting an invitation to participate in a driving challenge to the second driver, including the new common driving challenge route 53, possibly also including a planned starting time.

The system is further configured to, upon receiving an acceptance to participate in the driving challenge from the second driver, initiating said vehicle driving challenge between the first and second drivers along said new common driving challenge route 53, as illustrated in figure 4d.

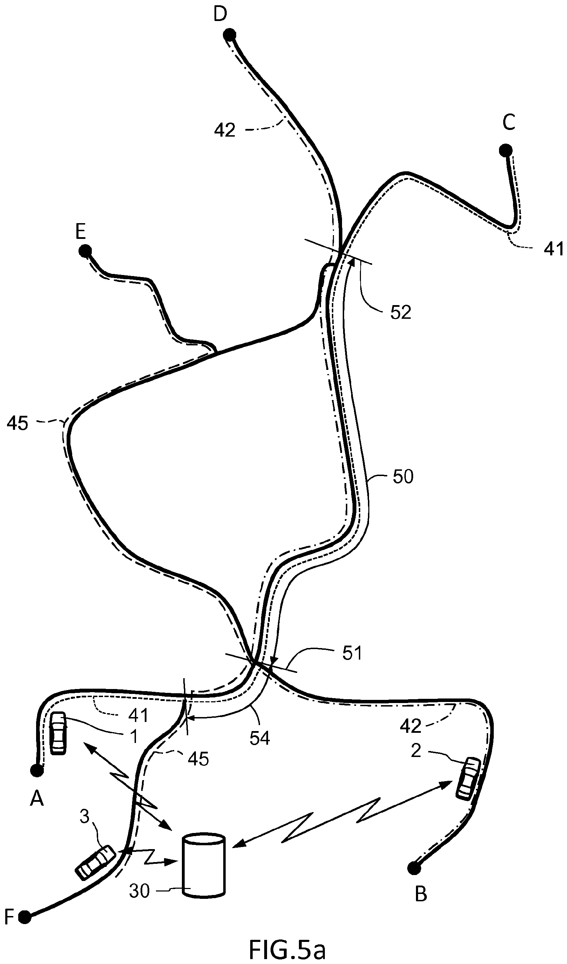

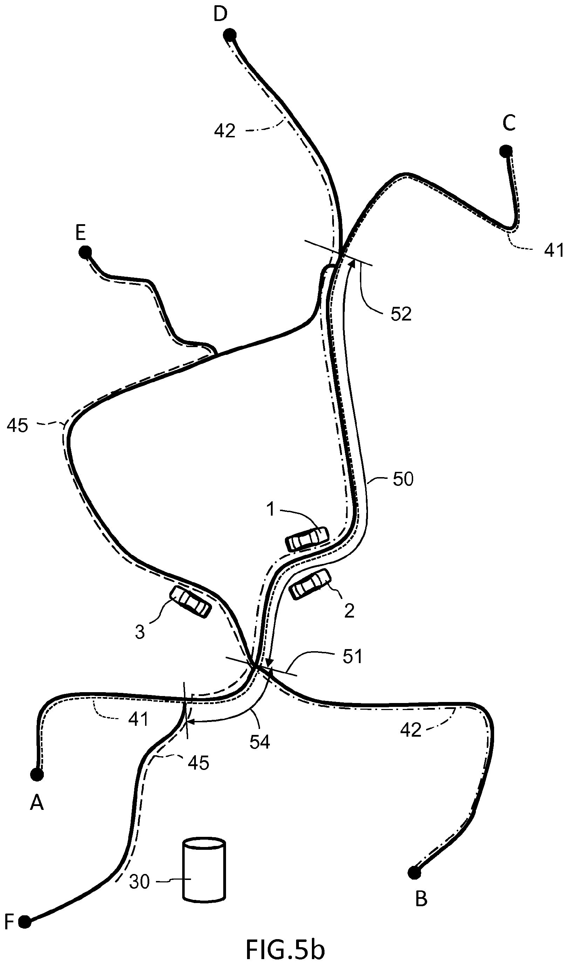

Still a further example embodiment of the vehicle driving challenge system is described below with reference to figures 5a and 5b, which show first and second time points of vehicle driving challenge sequence.

Specifically, in these schematic and purely example illustrations, the first vehicle 1 starts from point A and drives along a first planned driving route 41 to destination C, the second vehicle 2 starts from point B and drives to destination D, and the third vehicle 3 starts from point F and drives along a third planned driving route 45 to destination E.

This driving challenge system according to this example embodiment additionally comprises a third mobile module including a third mobile communication device and a third mobile user interface, wherein the third mobile module is configured for being included in a third vehicle 3 and being operated by a third driver.

Similar to the example embodiment described with reference to figure 2a and 2b, the driving challenge initiation may start with that the first mobile module 10 registers a request from the first driver via the first mobile user interface 12 for initiating a driving challenge. The first mobile module thereafter submits a corresponding request to the computer server system 30 via the first mobile communication device 11, which request includes the planned driving route information of the first vehicle, i.e. route A to C, and current location of the first mobile module 10.

Upon receipt of said request, the computer server system 30 tries to identify further vehicles having drivers that have requested or indicated willingness to participate in a driving challenge by means of the mobile communication devices and second mobile user interfaces of the further vehicles. This identification may for example be performed by simply searching a list a vehicles having previously submitted a request or otherwise indicated willingness to participate in a driving challenge. The request for initiating a driving challenge from the first vehicle may be received by the computer server system 30 before and/or after receiving the request or indication of willingness to participate in a driving challenge by the further vehicles.

Consequently, according to one example embodiment, and with reference to figure 5a-5b, the vehicle driving challenge system is configured for identifying also a third vehicle 3 having a third driver, wherein the third driver has requested or indicated willingness to participate in a driving challenge by means of a third mobile module including a third mobile communication device and a third mobile user interface, and wherein the third vehicle 3 has a planned driving route 45 at least partly in common with the planned driving route 41 of the first vehicle.

In the example embodiment of figure 5a, the third vehicle 3 has indeed a planned driving route 45 in common with the planned driving route 41 of the first vehicle 1. Therefore, the system may determine also a further common driving challenge route 54 associated with the first and third vehicles and based on the planned driving route 41 of the first vehicle 1.

Thereafter, the system is configured for presenting the common driving challenge route 50 associated with the first and second vehicles 1, 2 and the further common driving challenge route 54 associated with the first and third vehicles 1, 3 to the first driver, and receiving a selection to initiate a driving challenge along one of said common driving challenge routes 50, 54 from the first driver.

In the present example, the first driver selected initiating a vehicle driving challenge based on the common driving challenge route 50 associated with the first and second vehicles 1, 2. As a result, the system is configured for initiating said real-time concurrent vehicle driving challenge between the first and second drivers along said common driving challenge route 50 in accordance with the selection of the first driver, as depicted by figure 5b.

The example embodiment described above, relies on a third vehicle 3 having a planned driving route 45 in common with the planned driving route 41 of the first vehicle 1 for establishing a further common driving challenge route 54. However, similar to the example embodiment described above with reference to figure 2a-2b, other matching processes may be used for identifying a suitable third vehicle. For example, the matching process may be based on a third vehicle being located within a range of less than 20 km from the location of the first vehicle, or a third vehicle that is estimated able to take a driving route that is running at least partly in common with the planned driving route of the first vehicle 1. Reference is made to the description relating to figures 2a-2b above for details.

Furthermore, for providing further improvement in terms of quick, efficient and user-friendly initialisation process for the vehicle driving challenge, the timing of an estimated arrival times of the first and second vehicles 1, 2 at the start 51 of said common driving challenge route 50, as well as the timing of an estimated arrival times of the first and third vehicles 1, 3 at the start of said further common driving challenge route 54, may be taken into account in the matching process described above. For example, the system be configured such that vehicle driving challenge between the first and third drivers along the further common driving challenge route 54 is only initiated when the estimated arrival times of the first and third vehicles 1, 3 do not differ too much, such as for example less than 10 minutes.

According to one example embodiment, one or more vehicles 1,2,3 participating in a vehicle driving challenge may have fully autonomous driving capability. Thereby, the vehicle driving challenge system may be configured to activating said fully autonomous driving upon initiating the vehicle driving challenge between the first and second drivers along the common driving challenge route 50, such that said one or more vehicles 1,2 ,3 passes the start 51 of the common driving challenge route 50, 53, 54 at a planned starting time of the vehicle driving challenge, as described more in detail above.

According to a further example embodiment, one or more or all of the vehicles 1,2,3 participating in a vehicle driving challenge may include a vehicle driving assistance system or autonomous driving assistance system that is configured to operate in supervision mode at least during any ongoing vehicle driving challenge, wherein said system is configured for performing an active supervision over the associated vehicle's driving behaviour for improving safe driving and adherence to the traffic laws.

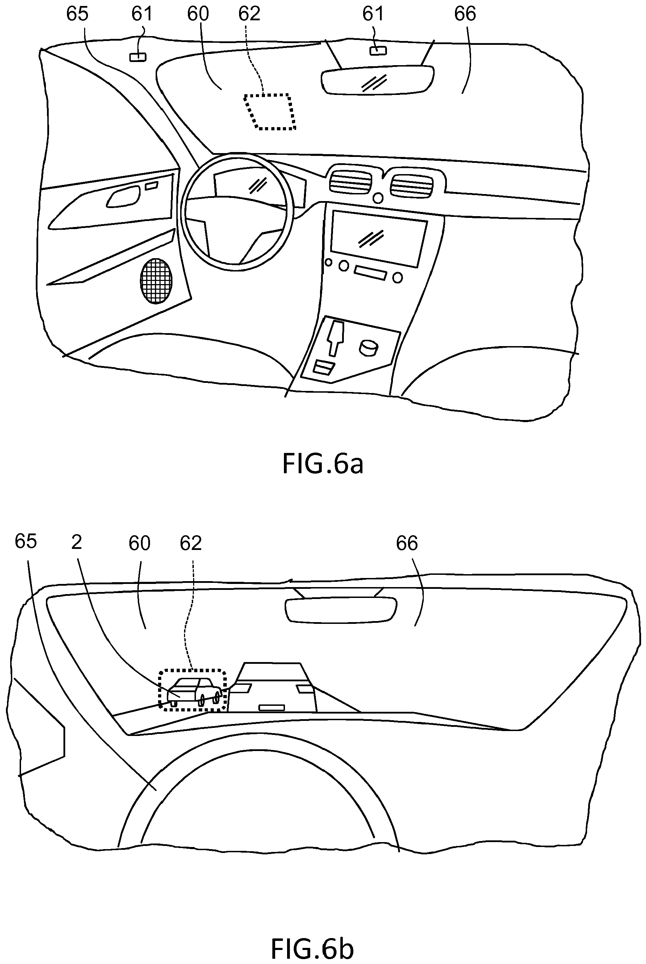

With reference to figures 6a and 6b, which illustrates the interior of the first vehicle having a steering wheel 65 and a front window 66, the vehicle driving challenge system may according to a further example embodiment comprise a first vehicle 1 including said first mobile module 10 and a second vehicle 2 including said second mobile module 20, wherein the first vehicle 1 further comprises a wearable or non-wearable augmented-reality head-up display or augmented-reality front window 60, a first sensor device 61 for detecting eye or head position of the first driver, and a second sensor device (not showed) for detecting relative position of the first and second vehicles 1,2, wherein the head-up display or augmented-reality front window 60 is configured for, based on sensor data from first and second sensor devices 61, displaying a marking 62 on the head-up display or augmented-reality front window 62 in the line-of-sight between the first driver and the second vehicle 2, such that the second vehicle 2 may be clearly visually identified by the first driver when looking out through the front window 66.

The marking 62 is illustrated as a rectangle displayed on the augmented-reality front window 60 in figures 6a and 6b, but may alternative markings may be provided. Figure 6b illustrates the view of the first driver, wherein the marking 62 can be seen being located in the line-of-sight between the first driver and the second vehicle 2.

The first sensor device 61 for detecting eye or head position of the first driver may for example be implemented in form of a stereo-camera system including two spaced-apart cameras. Moreover, the second sensor device for detecting relative position of the first and second vehicles 1,2 may for example be implemented in form of a radar or lidar system configured for scanning an area in front of the vehicle 1.

In the example embodiment of figure 6a and 6b, the first vehicle 1 was equipped with augmented-reality front window 60. This may for example be implemented by means of a LCD screen covering part, or all, of the front window 66. In some example embodiments, the first vehicle 1 may additionally be equipped with one or more augmented-reality side windows, and/or an augmented-reality rear window, and/or an augmented-reality rear view mirror and/or one or two augmented-reality wing mirrors, configured for displaying for example a marking 62 and/or a virtual image of a personalized feature in the line-of-sight 68 between the first driver and the second vehicle 2.

Alternatively, the first vehicle 1 may be equipped with an augmented-reality head-up display that for example be located on the dashboard of the vehicle and in the general line-of-sight between the first driver and traffic in front of the first vehicle 1. Such an augmented-reality head-up display is typically fastened to the dashboard. Still more alternatively, the first vehicle 1 may be equipped with wearable augmented-reality head-up display, for example in form of glasses or helm with some kind of display installed therein. Technical details for implementing an augmented-reality head-up display or augmented-reality front window are known from for example WO2017053616, US20160163108A1, US15/534,976, which are included herein by reference.

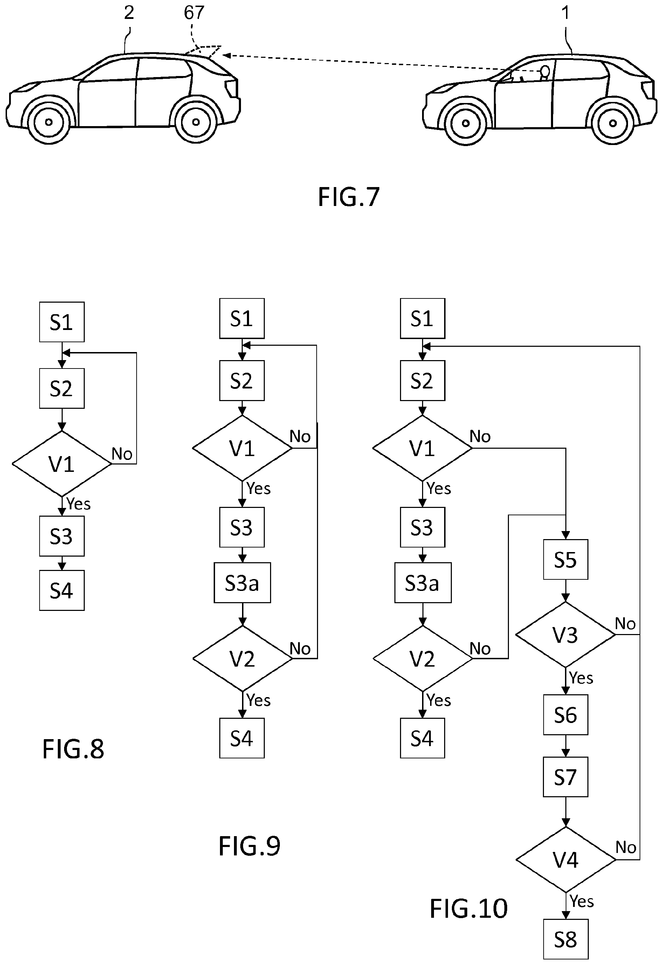

With reference to figure 7, the vehicle driving challenge system may according to a further example embodiment be configured such that for example the first driver, by means of said wearable or non-wearable augmented-reality head-up display or augmented-reality front window 60, sees an imaginary personalized visual exterior of the second vehicle when looking out through the front window, such as for example an imaginary roof spoiler 67. The roof spoiler 67 is thus unreal but it is displayed on the wearable or non-wearable augmented-reality head-up display or augmented-reality front window 60 at a location in line-of-sight 68 between the eyes of first driver and a desired location of the roof spoiler on the second vehicle.

For providing the own vehicle with a personalized visual exterior, such as spoilers, vehicle paint work, vehicle body work, etc. the driver of the vehicle, or someone else, may submit a request to the computer server system 30 , specifying the desired personalized visual exterior. Data relating to the desired personalized visual exterior is subsequently provided from the computer server system 30 to the other vehicles participating in a driving challenge.

In other words, the computer server system may be configured to receive a request submitted by the second driver for personalizing a visual exterior of the second vehicle by a personalized feature, as seen through the head-up display or augmented-reality front window by the first driver, and displaying a virtual image of the personalized feature on the head-up display or augmented-reality front window in the line-of-sight 68 between the first driver and the second vehicle, such that the first driver sees a personalized visual exterior of the second vehicle when looking out through the front window.

A method for performing a vehicle driving challenge according to one example embodiment is hereinafter schematically described with reference to figure 8, which method comprises a first step S1 of receiving, in the computer server system 30, a request for initiating a driving challenge submitted by the first driver of the first vehicle 1 by means of the first mobile module 10 including the first mobile communication device 11 and the first mobile user interface 12, wherein the request includes planned driving route information and location of the first vehicle 1. A second step S2 of the method involves identifying of a second vehicle 2 having a second driver, wherein the second driver has requested or indicated willingness to participate in a driving challenge by means of a second mobile module 20 including a second mobile communication 21 device and a second mobile user interface 22, and wherein the second vehicle 2: has a planned driving route 42 at least partly in common with the planned driving route 41 of the first vehicle 1, or is located within a range of less than 20 km from the location of the first vehicle 1, or is estimated able to take a driving route that is running at least partly in common with the planned driving route 41 of the first vehicle 1. If a second vehicle has been identified in the second step S2, as schematically illustrated by a first verification step V1, the method proceeds to a third step S3 involving determining a common driving challenge route 50 associated with the first and second vehicles and based on the planned driving route of the first vehicle 1, and finally a fourth step S4 involving initiating a real-time concurrent vehicle driving challenge between the first and second drivers along the common driving challenge route 50. However, if a second vehicle 2 was not identified in the second step S2, the method may go back to the second step S2 of involving identifying of a second vehicle 2.

Various alterations and modifications may be made to the method described above. For example, a modified method is hereinafter schematically described with reference to figure 9, which method comprises a first, second and third steps S1-S3 similar to that described with reference to figure 8. However, in this example embodiment, the method comprises an additional step 3a of submitting an invitation to participate in a driving challenge to the second driver, including the common driving challenge route 50, and possibly also including the planned starting time. If the computer server system 30 receives an acceptance to participate in the driving challenge from the second driver based on the proposed common driving challenge route 50, as schematically illustrated by a second verification step V2, the method proceeds to the fourth step S4 involving initiating a real-time concurrent vehicle driving challenge between the first and second drivers along the common driving challenge route 50. However, if the computer server system 30 receives a rejection to participate in the driving challenge from the second driver based on the proposed common driving challenge route 50, the method may go back to the second step S2 of involving identifying of a new second vehicle 2.

Still a further example of a modified method is hereinafter schematically described with reference to figure 10, which method comprises the first, second, third and fourth steps S1-S4 similar to that described with reference to figure 8, and possibly also the additional step 3a of submitting an invitation to participate in a driving challenge to the second driver, as described with reference to figure 9. However, in this example embodiment, when the second driver having requested or indicated willingness to participate in a driving challenge is identified, but the second vehicle has not a planned driving route sufficiently in common with the planned driving route of the first vehicle, such that no second vehicle was identified in the second step S2 as verified in the first verification step V1, or when the second driver does not accept participating in a driving challenge based on the planned driving route of the first vehicle, as verified in the second verification step V2, the method proceeds to a fifth step S5 involving checking whether the first vehicle 1 is estimated able to take a driving route that is running at least partly in common with the planned driving route of the second vehicle, and if affirmative, as schematically illustrated by a third verification step V3, the method proceeds to a sixth step S6 involving determining a new common driving challenge route 53 associated with the first and second vehicles and based on the planned driving route of the second vehicle 2. The method then further comprises a seventh step S7 of submitting an invitation to participate in a driving challenge to the first driver, including the new common driving challenge route 53, and possibly also the planned starting time, and upon receiving an acceptance to participate in the driving challenge from the first driver in a schematically illustrated fourth verification step V4, the method proceeds to an eight step S8 involving initiating said vehicle driving challenge between the first and second drivers along said new common driving challenge route 53.

Any of the embodiments of the method described above may additionally comprise a step of displaying a score status of each vehicle 1, 2, 3 participating in the vehicle driving challenge on the display within each vehicle 1, 2, 3 participating in the vehicle driving challenge, wherein the score status is based on one or more driving challenge rules. For example, one driving challenge rule may correspond to how time-accurate the competing vehicles passes a set of time gates along the common driving challenge route.

In other words, a set of time gates is distributed along the common driving challenge route 50 and a time stamp is linked to each time gate. The participants of the vehicle driving challenge are then supposed to pass by each time gate as closes as possible to the time stamp linked to each gate, wherein a higher score is awarded when a vehicle passes the time gate at a time point closer to the time stamp.

A further example of driving challenge rule may correspond to the accumulated electric energy and/or fuel consumption during the driving along the common driving challenge route.

In other words, the driver that consumes the smallest amount of the accumulated electric energy and/or fuel during the driving challenge receives largest score.

Still a further example of driving challenge rule may correspond to how well the vehicle maintains a constant vehicle speed during the driving challenge, e.g. from the start 51 to the end 52. Constant speed is generally deemed providing improved traffic flow with less start/stop and less risk for accidents.

Still a further example of driving challenge rule may correspond to how little the vehicle friction brakes and/or engine brake are used. Friction and/or engine braking generally results in less efficient driving in terms of energy or fuel consumption. Hence, a scoring system awarding little use of vehicle friction brakes and/or engine brake may be implemented. This may also be beneficial in terms of improved traffic flow and reduced risk for accidents because other drivers may be less frequently forced to brake their own vehicles due to braking of any of the vehicles driven by participant of the driving challenge.

Yet a further example of driving challenge rule may correspond to the lowest maximal vehicle longitudinal and lateral rate of change of acceleration and deceleration levels. Smooth driving generally implies low vehicle longitudinal and lateral rate of change of acceleration and deceleration levels, and smooth driving generally results in improved traffic flow and reduced risk for accidents. Hence, having scores rewarding low vehicle longitudinal and lateral rate of change of acceleration and deceleration levels generally improve the overall traffic situation.

Still a further example of driving challenge rule may correspond to the highest average vehicle speed without changing lane. This challenge thus involves selecting the best lane from the beginning, i.e. the lane having the least amount of traffic jams and highest average speed, and thus also results in less lane changes of the participants of the driving challenge, thereby contributing to improved traffic flow and reduced risk for accidents.

A further example of driving challenge rule may correspond to the shortest time for traveling from start to end of the common driving challenge route. This vehicles participating in this challenge must however in general be controlled and/or supervised for ensuring safe driving in adherence to the traffic regulation.

A final example of driving challenge rule may correspond to how seldom a vehicle driving assistance system or autonomous driving assistance system is activated for maintaining safe driving and adherence to the traffic laws. Each activation of the vehicle driving assistance system or autonomous driving assistance system may for example reward the driver of said vehicle with some type of penalty score.

In one example embodiment, the vehicle braking performance and/or vehicle acceleration performance of at least one of the vehicles participating in the vehicle driving challenge are temporarily reduced during the vehicle driving challenge for increasing the complexity for at least one of the first and second drivers. In other words, the vehicle braking performance may be reduced by reducing the amount of brake servo assistance, and/or by setting a maximal allowed brake pressure, or the like. Similarly, the vehicle acceleration performance may be reduced, for example by reducing the power output of the vehicle propulsion source, or the like. As a result, the drivers must be more focused and attentive while driving for achieving a high score. The vehicle driving assistance system or autonomous driving assistance system may be activated for maintaining safe driving, and for example returning vehicle braking performance and/or vehicle acceleration performance to default setting as soon any risk is detected.

In one example embodiment, the method comprises displaying said common driving challenge route(s) on a display within each vehicle participating in the vehicle driving challenge. Thereby, the drivers participating in the challenge may be well-informed about the planned driving route, and how far it is to for example the end 52.

In one example embodiment, the method comprises displaying also a real-time position of each vehicle participating in the vehicle driving challenge on the display within each vehicle participating in the vehicle driving challenge. Thereby, the drivers participating in the challenge may be well-informed about both the own vehicle's current position, as well as the competitor vehicles positions.

Although the disclosure has been described in relation to specific combinations of components, it should be readily appreciated that the components may be combined in other configurations as well which is clear for the skilled person when studying the present application. Thus, the above description of the example embodiments of the present disclosure and the accompanying drawings are to be regarded as a non-limiting example of the disclosure and the scope of protection is defined by the appended claims. Any reference sign in the claims should not be construed as limiting the scope.

Although discussed above as methods described by the flowchart of Figures 8 - 10, it should be appreciated that one or more operations/steps may be omitted and/or added from the methods discussed, and some operations/steps may be merged to a single operation/step. Further, the operations may be performed in any order and do not necessarily imply an order as provided. Rather, the methods discussed are merely one embodiment of the present disclosure as contemplated.

## Claims

1. Vehicle driving challenge system comprising:
a first mobile module (10) including a first mobile communication device (11) and a first mobile user interface (12) and being configured for being included in a first vehicle (1) and being operated by a first driver,
a second mobile module (20) including a second mobile communication device (21) and a second mobile user interface (22) and being configured for being included in a second vehicle (2) and being operated by a second driver,
a computer server system (30) configured for enabling wireless communication with each of the first and second mobile communication devices (11, 21),
wherein the first mobile module (10) is configured for registering a request from the first driver via the first mobile user interface (12) for initiating a driving challenge, and subsequently submitting a corresponding request to the computer server system (30) via the first mobile communication device (12), which request includes planned driving route information and location of the first mobile module (10),
wherein the computer server system (30) is configured for, upon receipt of said request, checking whether the second driver has requested or indicated willingness to participate in a driving challenge, and checking whether the second mobile module (20):
- has a planned driving route (42) at least partly in common with the planned driving route (41) of the first mobile module (10), or
- is located within a range of less than 20 km from the location of the first mobile module (10), or
- is estimated able to take a driving route that is running at least partly in common with the planned driving route (41) of the first mobile module (10),
and if affirmative, determining a common driving challenge route (50) associated with the first and second mobile modules (10, 20) and based on the planned driving route (41) of the first mobile module (10), and
initiating a real-time concurrent vehicle driving challenge between the first and second drivers along the common driving challenge route (50).

2. Vehicle driving challenge system according to claim 1, further comprising a first vehicle (1) including said first mobile module (10) and a second vehicle (2) including said second mobile module (20), wherein the first vehicle (1) further comprises:
an augmented-reality head-up display or augmented-reality front window (60),
a first sensor device (61) for detecting eye or head position of the first driver, and
a second sensor device for detecting relative position of the first and second vehicles (1, 2),
wherein the head-up display or augmented-reality front window (60) is configured for, based on sensor data from first and second sensor devices (61), displaying a marking (62) on the head-up display or augmented-reality front window (60) in the line-of-sight (68) between the first driver and the second vehicle (2), such that the second vehicle (2) may be clearly visually identified by the first driver when looking out through the front window (66).

3. Method for performing a vehicle driving challenge comprising:
receiving, in a computer server system (30), a request for initiating a driving challenge submitted by a first driver of a first vehicle (1) by means of a first mobile module (10) including a first mobile communication device (11) and a first mobile user interface (12), wherein the request includes planned driving route information (41) and location of the first vehicle (1),
identifying a second vehicle (2) having a second driver, wherein the second driver has requested or indicated willingness to participate in a driving challenge by means of a second mobile module (20) including a second mobile communication device (21) and a second mobile user interface (22), and wherein the second vehicle (2):
- has a planned driving route (42) at least partly in common with the planned driving route (41) of the first vehicle (1), or
- is located within a range (15) of less than 20 km from the location of the first vehicle (1), or
- is estimated able to take a driving route that is running at least partly in common with the planned driving route (41) of the first vehicle (1),
when a second vehicle (1) has been identified, determining a common driving challenge route (50) associated with the first and second vehicles (1,2) and based on the planned driving route (41) of the first vehicle (1), and
initiating a real-time concurrent vehicle driving challenge between the first and second drivers along the common driving challenge route (50).

4. Method for performing a vehicle driving challenge according to claim 3, wherein the second vehicle (2):
has a planned driving route (42) at least partly in common with the planned driving route (41) of the first vehicle (1), and wherein an estimated arrival time at a start of the common planned driving route differs less than 10 minutes between the first and second vehicles (1,2), or
is located within a range of less than 20 km from the location of the first vehicle (1), or
is estimated able to take a driving route that is running at least partly in common with the planned driving route (41) of the first vehicle (1), and wherein an estimated arrival time at a start of the common driving route differs less than 10 minutes between the first and second vehicles (1,2).

5. Method for performing a vehicle driving challenge according to any of preceding claims 3 to 4, further comprising, after determining the common driving challenge route (51):
submitting an invitation to participate in a driving challenge to the second driver, including the common driving challenge route (50), and
upon receiving an acceptance to participate in the driving challenge from the second driver, initiating said vehicle driving challenge between the first and second drivers along said common driving challenge route (50).

6. Method for performing a vehicle driving challenge according to any of preceding claims 3 to 5, further comprising, when the second driver having requested or indicated willingness to participate in a driving challenge is identified, but
- the second vehicle (2) has not a planned driving route (40) sufficiently in common with the planned driving route (41) of the first vehicle (1), or
- the second driver does not accept participating in a driving challenge based on the planned driving route (41) of the first vehicle (1),
checking whether the first vehicle (1) is estimated able to take a driving route that is running at least partly in common with the planned driving route (42) of the second vehicle (2), and if affirmative,
determining a new common driving challenge route (53) associated with the first and second vehicles (1,2) and based on the planned driving route (42) of the second vehicle (2),
submitting an invitation to participate in a driving challenge to the first driver, including the new common driving challenge route (53), and upon receiving an acceptance to participate in the driving challenge from the first driver,
initiating said vehicle driving challenge between the first and second drivers along said new common driving challenge route (53).

7. Method for performing a vehicle driving challenge according to any of preceding claims 3 to 6, comprising displaying also a score status of each vehicle (1,2) participating in the vehicle driving challenge on a display within each vehicle (1,2) participating in the vehicle driving challenge, wherein the score status of each participating vehicle is based on one or more of the following challenge rules:
- how time-accurate the vehicle (1,2) passes a set of time gates along the common driving challenge route (50, 53),
- accumulated electric energy and/or fuel consumption during the driving along the common driving challenge route (50, 53),
- how well the vehicle (1,2) maintains a constant speed,
- how little the vehicle friction brake and/or engine brake are used,
- the lowest maximal vehicle longitudinal and lateral rate of change of acceleration and deceleration levels,
- highest average vehicle speed without changing lane,
- shortest time for traveling from start to end of the common driving challenge route (50, 53),
- how seldom a vehicle driving assistance system or autonomous driving assistance system is activated for maintaining safe driving and adherence to the traffic laws.

8. Method for performing a vehicle driving challenge according to any of preceding claims 3 to 7, wherein vehicle braking performance and/or vehicle acceleration performance of at least one of the vehicles (1,2) participating in the vehicle driving challenge are temporarily reduced during the vehicle driving challenge for increasing the complexity for at least one of the first and second drivers.

9. Method for performing a vehicle driving challenge according to any of preceding claims 3 to 8, wherein the method further comprises:
monitoring eye or head position of the first driver by means of a first sensor device (61) for detecting eye or head position of the first driver,
monitoring relative position of the first and second vehicles (1,2) by means of a second sensor device for detecting relative position of the first and second vehicles (1,2),
displaying a marking (62) on a head-up display or augmented-reality front window (60) in the line-of-sight (68) between the first driver and the second vehicle (2), such that the second vehicle (2) may be clearly visually identified by the first driver when looking out through the front window (66).

10. Method for performing a vehicle driving challenge according to claim 9, comprising:
receiving, in the computer server system (30), a request submitted by the second driver for personalizing a visual exterior of the second vehicle (2) by a personalized feature, as seen through the head-up display or augmented-reality front window (60) by the first driver,
displaying a virtual image of the personalized feature on the head-up display or augmented-reality front window (60) in the line-of-sight (68) between the first driver and the second vehicle (2), such that the first driver sees a personalized visual exterior of the second vehicle (2) when looking out through the front window (66).

11. Method for performing a vehicle driving challenge according to any of preceding claims 3 to 10, comprising operating at least during ongoing vehicle driving challenge a vehicle driving assistance system or autonomous driving assistance system in a supervision mode, in which the system performs active supervision over the vehicle's driving behaviour for improving safe driving and adherence to the traffic laws.

12. Method for performing a vehicle driving challenge according to any of preceding claims 3 to 11, wherein one or both of the first and second vehicles (1,2) have fully autonomous driving capability, and wherein the method comprises, upon initiating the vehicle driving challenge between the first and second drivers along the common driving challenge route (50,53), activating said fully autonomous driving, such that the first and/or the second vehicles (1,2) passes a start (51) of the common driving challenge route (50,53) at a planned starting time of the vehicle driving challenge.

13. Method for performing a vehicle driving challenge according to any of preceding claims 3 to 12, further comprising
identifying also a third vehicle (3) having a third driver, wherein the third driver has requested or indicated willingness to participate in a driving challenge by means of a third mobile module including a third mobile communication device and a third mobile user interface, and wherein the third vehicle (3) has:
- has a planned driving route (45) at least partly in common with the planned driving route of the first vehicle (41), or
- is located within a range of less than 20 km from the location of the first vehicle (1), or
- is estimated able to take a driving route that is running at least partly in common with the planned driving route (41) of the first vehicle (1),
when a third vehicle (3) has been identified, determining also a further common driving challenge route (54) associated with the first and third vehicles (1,3) and based on the planned driving route of the first vehicle (1),
presenting the common driving challenge route (50) associated with the first and second vehicles (1,2) and the further common driving challenge route (54) associated with the first and third vehicles (1,3) to the first driver, and receiving a selection to initiate a driving challenge along one of said common driving challenge routes (50,54) from the first driver,
initiating said real-time concurrent vehicle driving challenge between the first and second drivers along said common driving challenge route (50) or between the first and third drivers along said further common driving challenge route (54) in accordance with the selection of the first driver.

14. Method for performing a vehicle driving challenge according to any of preceding claims 3 to 13, comprising displaying said common driving challenge route(s) (50,53,54) on a display within each vehicle (1,2,3) participating in the vehicle driving challenge.

15. Method for performing a vehicle driving challenge according to claim 14, comprising displaying also a real-time position of each vehicle (1,2,3) participating in the vehicle driving challenge on a display within each vehicle (1,2,3) participating in the vehicle driving challenge.
